# EUROPEAN PATENT APPLICATION

(11) **EP 2 858 021 A1**
(43) Date of publication of application: **08.04.2015**
(21) Application number: 13797084.4
(22) Date of filing: 09.04.2013
(51) Int. Cl.: G06Q 30/04, G06F 3/048, G06F 3/0481, G06F 13/00, G06Q 30/06, H04M 11/00

(54) **COMMUNICATION TERMINAL DEVICE, ACCOUNTING DEVICE, AND INFORMATION DISTRIBUTING SYSTEM**

(30) Priority: 31.05.2012 JP 2012124536
(71) Applicant: NTT DOCOMO, INC., Chiyoda-ku Tokyo 100-6150 (JP)
(72) Inventor: NAKAYAMA Takehiro, Tokyo 100-6150 (JP); HARA Mirai, Tokyo 100-6150 (JP)
(74) Representative: Viering, Jentschura & Partner Patent- und Rechtsanwälte
(86) International application number: PCT/JP2013/060729
(87) International publication number: WO 2013/179777

(57) **Abstract**

A communication terminal device includes an icon creation unit that creates an icon on a display screen for access to resources, the icon containing access destination information so that classification of the resources can be determined, a information storage unit that stores local resources, a resource viewing unit that acquires and outputs resources in response to a selection input of the icon, and an icon use information transmission unit that transmits icon use information for the selected and input icon to an accounting server device together with access destination information as information from which classification of the resources can be determined, in which the resource viewing unit acquires the network resources based on redirection information received from the accounting server device when the selected resources are the network resources, and acquires the local resources from the information storage unit when the resources are the local resources.

## Description

### Technical Field

The present invention relates to a communication terminal device, an accounting device, and an information distributing system that realize an information distribution service over a communication network.

### Background Art

The frequency at which the Internet is accessed from communication terminal devices having functions of connecting to communication networks, such as portable phones or personal computers (hereinafter referred to as "PCs"), is greatly increasing year by year. In recent years, particularly, multifunctional portable phones called smartphones have spread worldwide. A user of the communication terminal device can achieve a desired purpose by accessing web content on the Internet. For example, when the user wants to know the latest news, he or she may access web sites of media such as newspaper publishers. When the user wants to get transfer guidance information of a transportation facility, he or she may access a web site that presents a timetable or a railway route. Further, for a web site using HTML5 (HyperText Markup Language 5), a more advanced user interface can be realized since a web application similar to native application software can be executed by support of a browser.

Here, since there are a large number of web sites built on the Internet, users have used a great deal of effort selecting through the web sites. Particularly, for a web site used repeatedly many times, enabling the web site to be accessed easily (this scheme is referred to as "guidepath reinforcement") is important in improvement of user convenience. Further, this guidepath reinforcement is important to a web site operator in that a frequency of visits to his or her web site increases and an economic value increases.

For example, an icon creation method described in Patent Literature 1 below is known in the related art as guidepath reinforcement. In this icon creation method, a user transmits identification information of an advertisement provider to an icon creation device to acquire content information, receives icon information for access to a web site according to the content information, and then creates an icon based on the icon information. Specifically, the user recognizes the identification number (for example, last four digits of a phone number) of the advertising provider from a banner or the like and transmits this identification number to an icon information transmission device using a terminal device. The icon information transmission device sends back content information corresponding to this identification information to the terminal device, and transmits icon information for access to the web site related to the content information to the terminal device. As a result, the icon for access to the web site is automatically created in the terminal device.

In addition, when such a guidepath reinforcement service is to be provided, it is necessary to calculate an economic value for the icon information provided to the user and calculate a charge to be charged to a web site operator or the user. As a calculation method in this case, a method of accumulating the number of times the icon is clicked by a terminal device of the user to calculate a charge or totaling the number of icon registrations in the terminal device and performing charging according to the number of registrations as described in Patent Literature 2 is known.

### Citation List

### Patent Literature

[Patent Literature 1] Japanese Patent Laid-Open No. 2001-344052
[Patent Literature 2] Japanese Patent Laid-Open No. 2004-140511

### Summary of Invention

### Technical Problem

However, in the calculation method of the related art described above, processing efficiency is low since it is necessary for a charge calculation device to collect icon use information in the terminal device of the user each time the icon use frequency is totaled.

Therefore, the present invention has been made in view of this problem, and an object of the present invention is to provide a communication terminal device, an accounting device, and an information distributing system capable of efficiently calculating an accurate accounting amount according to an icon use frequency. **Solution to Problem**

In order to solve the above problem, a communication terminal device of one aspect of the present invention includes an icon creation means configured to create an icon on a display screen for access to resources including network resources on a communication network and locally stored local resources, the icon containing access destination information containing an access destination for the resources so that it is able to be determined whether the resources are the network resources or the local resources; a resource storage means configured to store the local resources; a resource viewing means configured to acquire and output resources corresponding to the access destination information included in the icon in response to a selection input of the icon by a user; and a use information transmission means configured to transmit use information for the selected and input icon to an accounting device together with the access destination information corresponding to the icon as information from which it is able to be determined whether the resources are the network resources or the local resources, wherein the resource viewing means acquires, from over the communication network, the network resources based on redirection information received in response to the transmission of the use information from the accounting device when the resources corresponding to the access destination information are the network resources, and acquires the local resources from the resource storage means when the resources corresponding to the access destination information are the local resources.

Further, an accounting device of another aspect of the present invention includes a use information reception means configured to receive use information for selection input of an icon on a display screen from a communication terminal device together with access destination information containing an access destination of resources corresponding to the icon as information from which it is able to be determined whether the resources are network resources on a communication network or locally stored local resources; a use frequency totaling means configured to total a use frequency of the icon based on the use information; and a redirection means configured to identify redirection information of the network resources based on the access destination information when the resources are indicated to be network resources, and transmit the redirection information to the communication terminal device.

Further, an information distributing system of still another aspect of the present invention includes the communication terminal device described above, and the accounting device described above.

According to the communication terminal device, the accounting device, or the information distributing system of the above aspects, in the communication terminal device, the icon to which the access destination information is assigned so that classification of any one of the network resources and the local resources can be determined is produced on the display screen, and use information according to the selection input of the icon by the user is transmitted to the accounting device together with the access destination information as information from which the classification can be determined. Further, when resources corresponding to the access destination information contained in the icon selected and input by the user are network resources, the resources are acquired based on the redirection information received from the accounting device, and when the resources corresponding to the access destination information are the local resources, the resources are acquired from the resource storage means. Meanwhile, in the accounting device, when the use information for the icon is received from the communication terminal device, the icon use frequency is totaled based on the use information, and when the resources corresponding to the use information are network resources, the redirection information for the network resources corresponding to the access destination information is sent back to the communication terminal device. Accordingly, in the accounting device, a redirecting process for causing the communication terminal device to access the network resources and a process of collecting the use information are effectively executed in parallel. As a result, it is possible to efficiently calculate an accurate accounting amount according to the icon use frequency. It is also possible to effectively execute the redirecting process according to the classification of the resources that the communication terminal device wishes to access.

### Advantageous Effects of Invention

According to the present invention, it is possible to efficiently calculate an accurate accounting amount according to the icon use frequency.

### Brief Description of Drawings

Fig. 1 is a schematic configuration diagram of an information distributing system 1 according to a preferred embodiment of the present invention.
Fig. 2 is a block diagram illustrating a hardware configuration of an information processing device constituting a communication terminal device 2 and server devices 3, 4, 5 and 6 of Fig. 1.
Fig. 3 is a sequence diagram illustrating an operation of an automatic icon creation process in the information distributing system 1 of Fig. 1.
Fig. 4 is a diagram illustrating an image of a web page of a portal site displayed on a display screen of the communication terminal device 2 of Fig. 1.
Fig. 5 is a diagram illustrating an example of data content of HTML content received by the communication terminal device 2 of Fig. 1.
Fig. 6 is a diagram illustrating an example of an icon image generated on the display screen of the communication terminal device 2 of Fig. 1.
Fig. 7 is a sequence diagram illustrating another operation of the automatic icon creation process in the information distributing system 1 of Fig. 1.
Fig. 8 is a sequence diagram illustrating another operation of the automatic icon creation process in the information distributing system 1 of Fig. 1.
Fig. 9 is a sequence diagram illustrating another operation of the automatic icon creation process in the information distributing system 1 of Fig. 1.
Fig. 10 is a sequence diagram illustrating an operation of an icon use frequency totaling process and a redirecting process in the information distributing system 1 of Fig. 1.
Fig. 11 is a diagram illustrating an example of a data structure of total information totaled by an icon use frequency totaling unit 42 of Fig. 1.
Fig. 12 is a diagram illustrating an example of a data structure of total information totaled by the icon use frequency totaling unit 42 of Fig. 1.
Fig. 13 is a diagram illustrating an example of a data structure of total information totaled by the icon use frequency totaling unit 42 of Fig. 1.

### Description of Embodiments

Hereinafter, preferred embodiments of a communication terminal device, an accounting device, and an information distributing system according to the present invention will be described in detail with the drawings. In addition, the same elements are denoted with the same reference signs in description of the drawings, and repeated description will be omitted.

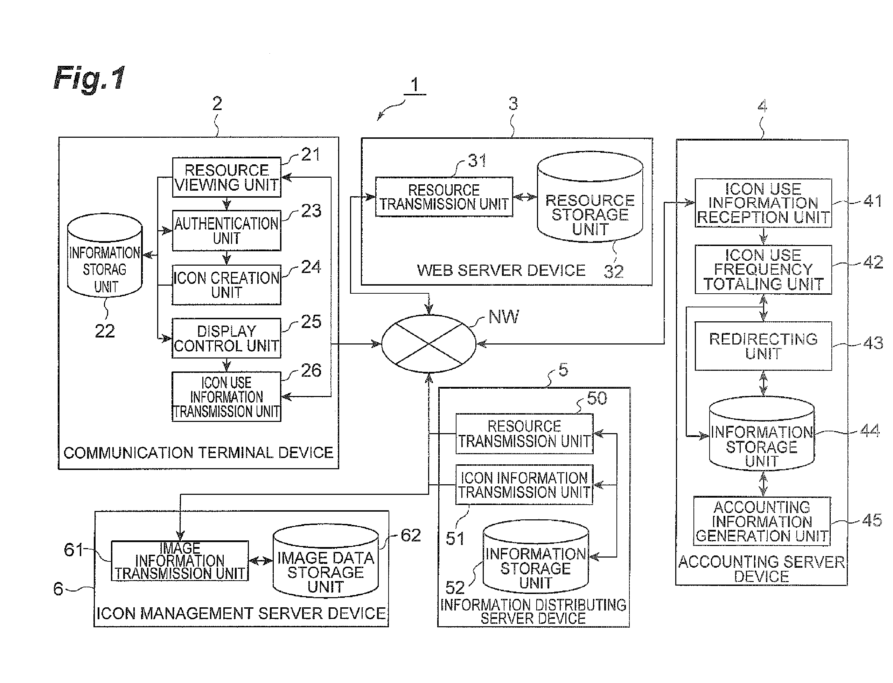

Fig. 1 is a schematic configuration diagram of an information distributing system 1 according to a preferred embodiment of the present invention. The information distributing system 1 illustrated in Fig. 1 is a communication system that manages resources such as text data, video data, and music data open to the public on a communication network NW, including a mobile communication network or the Internet, and distributes resources designated by the user using the communication terminal device 2 to the communication terminal device 2. Specifically, the information distributing system 1 includes the communication terminal device 2 that is used by the user who wishes to view the resources, a web server device 3 that manages resources, an accounting server device (accounting device) 4 that executes an accounting process for a guidepath reinforcement service for resources open to the public on the communication network NW, and an information distributing server device 5 and an icon management server device 6 that realize a portal site for access to the resources and provide the guidepath reinforcement service. Typically, the accounting server device 4, the information distributing server device 5, and the icon management server device 6 are operated and managed by a guidepath reinforcement service provider, and the web server device 3 is operated and managed by another web site operator. The "guidepath reinforcement service provider" stated herein is a provider that provides a service that gives benefits of the guidepath reinforcement to the user of the communication terminal device 2 and the web site operator, and collects a corresponding fee. This fee may be assumed to be collected from the user, collected from the web site operator, or collected from both the user and the web site operator. The guidepath reinforcement service provider in this embodiment also serves as the operator of the portal site.

The communication terminal device 2, the web server device 3, the accounting server device 4, the information distributing server device 5, and the icon management server device 6 can perform data communication with one another over the communication network NW. In addition, each of the web server device 3, the accounting server device 4, the information distributing server device 5, and the icon management server device 6 may include one server device or may be a server system in which a plurality of server devices operate in cooperation. In addition, some of the web server device 3, the accounting server device 4, the information distributing server device 5, and the icon management server device 6 may be integrated into a server device.

The communication terminal device 2 is a terminal device that acquires and outputs resources on the communication network NW represented by a portable phone terminal (including a smartphone), a PDA, a PC, or the like. Here, while only one communication terminal device 2 is illustrated in Fig. 1, a plurality of communication terminal devices may be included or correspondence between the communication terminal device 2 and the user may be arbitrary. For example, a plurality of users may use the communication terminal device 2 in common, or the same user may use a plurality of communication terminal devices 2.

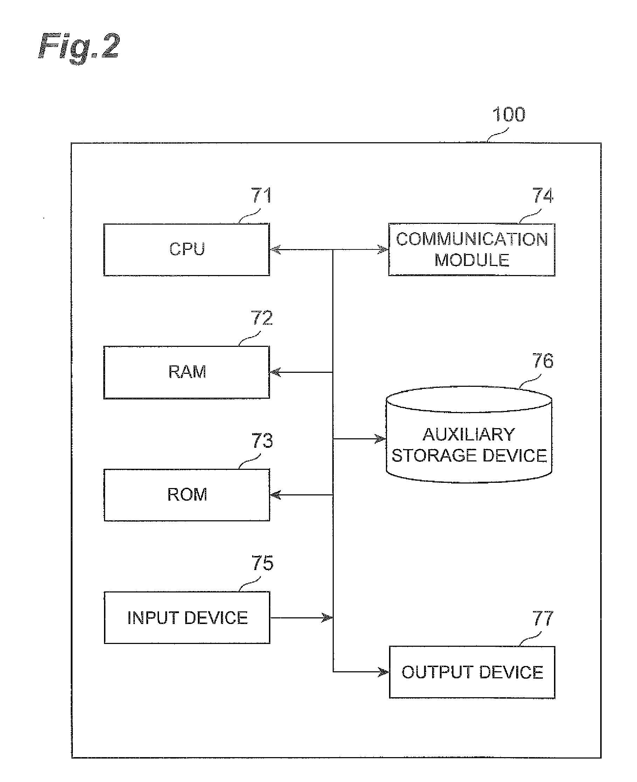

Fig. 2 is a block diagram illustrating a hardware configuration of an information processing device constituting each of the server devices 3, 4, 5, and 6 and the communication terminal device 2 of Fig. 1. This information processing device 100 is physically configured as a device including a CPU 71, a RAM 72 constituting a main storage device, a ROM 73, an auxiliary storage device 76 such as a hard disk device, an input device 75 such as an input key, a touch panel or a mouse that is an input device, an output device 77 such as a display or a speaker, and a communication module 74 that is responsible for transmission and reception of data over the communication network NW to or from another communication terminal device or server device. A function realized by the communication terminal device 2 or each of the server devices 3, 4, 5 and 6 is realized by causing a predetermined program to be read on hardware such as the CPU 71 or the RAM 72 illustrated in Fig. 2 to operate the communication module 74, the input device 75, the output device 77 under the control of the CPU 71, and performing data reading and writing in the RAM 72 and the auxiliary storage device 76.

Referring back to Fig. 1, the web server device 3 includes a resource transmission unit 31 and a resource storage unit 32 as functional components. Resources already open to the public on the communication network NW are stored in the resource storage unit 32. The open resources may include files or objects of various data formats, in addition to web content of various formats such as an HTML file, an XML (eXtensible Markup Language) file, SimpleText, Rich Text, image data, and a web application. When the resource transmission unit 31 receives a request to acquire resources according to an HTTP (HyperText Transfer Protocol) protocol from the communication terminal device 2, the resource transmission unit 31 reads resources designated by the acquisition request from the resource storage unit 32 and transmits the read resources to the communication terminal device 2.

The information distributing server device 5 includes a resource transmission unit 50, an icon information transmission unit 51, and an information storage unit 52 as functional components. Resources already open to the public as a portal site on the communication network NW are stored in the information storage unit 52. The open resources include files or objects of various data formats, in addition to the web content of various formats such as an HTML file, an XML (eXtensible Markup Language) file, SimpleText, Rich Text, image data, or a web application. For example, an HTML file containing a list of a plurality of web content names in which a hyperlink (access destination information) to web content open to the public on a plurality of web server devices 3 is embedded is contained in the resources open to the public as the portal site. Further, an authentication key such as a private key used in an authentication process with the communication terminal device 2 is also held in the information storage unit 52 in advance. Here, the information distributing server device 5 may store resources open to the public as a search engine for providing a function of searching for resources on the communication network NW, in addition to the resources open to the public as the portal site.

When the resource transmission unit 50 of the information distributing server device 5 receives an acquisition request (for example, HTTP GET request) for resources according to an HTTP protocol from the communication terminal device 2, the resource transmission unit 50 reads the resources designated in the acquisition request from the information storage unit 52 and transmits the read resources to the communication terminal device 2. The icon information transmission unit 51 receives an icon creation request containing resource identification information for identifying the resources open to the public on the communication network NW from the communication terminal device 2 and acquires a hyperlink (access destination information) corresponding to the resource identification information from the information storage unit 52. In addition, the icon information transmission unit 51 transmits icon creation information containing the access destination information to the communication terminal device 2 in response to the reception of the icon creation request. This icon creation information is referred to when an icon for access to the designated resources is automatically created in the communication terminal device 2. In this case, the icon information transmission unit 51 transmits icon creation information to which information encrypted using the authentication key held in the information storage unit 52 in advance is added. For example, part of the icon creation information encrypted using the authentication key is added to the information. Thus, the authentication key is shared in the communication terminal device 2 such that the specific information distributing server device 5 can be authenticated.

The icon management server device 6 includes an image information transmission unit 61 and an image data storage unit 62 as functional components. Image information about the resources corresponding to the icon to be created on the display screen of the communication terminal device 2 is stored in the image data storage unit 62 in advance. This image information is identified and managed by information for identifying corresponding resources (for example, a part of a URL (Uniform Resource Locator) indicating an address of the resources on the communication network NW). When an icon image request according to the HTTP protocol is received from the communication terminal device 2, the image information transmission unit 61 reads the image information corresponding to resources designated by the icon image request from the image data storage unit 62, and transmits the read image information to the communication terminal device 2. This image information is used to display the icon image on the display screen of the communication terminal device 2.

The communication terminal device 2 includes a resource viewing unit (resource viewing means) 21, an information storage unit (resource storage means) 22, an authentication unit 23, an icon creation unit (icon creation means) 24, a display control unit 25, and an icon use information transmission unit (use information transmission means) 26 as functional components. Hereinafter, a function of each component of the communication terminal device 2 will be described.

The resource viewing unit 21 acquires and outputs (performs rendering on) network resources that are resources on the communication network NW or local resources that are resources stored in the information storage unit 22 so that the user can access (view) the resources. In this case, the resource viewing unit 21 can acquire the network resources from the web server device 3 or the information distributing server device 5 using the redirection information received from the accounting server device 4 in response to the transmission of the icon use information about the icon by the icon use information transmission unit 26. In addition, the resource viewing unit 21 can also directly acquire the local resources from the information storage unit 22 without the redirecting process in the accounting server device 4, using the access destination information contained in the icon use information transmitted by the icon use information transmission unit 26. This function of the resource viewing unit 21, for example, is realized by a web browser.

In addition, when the resources of the web page indicating the portal site are received from the information distributing server device 5 and reviewed, the resource viewing unit 21 receives an input for designating specific resources from among a plurality of resources displayed in the web page from the user. Also, the resource viewing unit 21 generates an icon creation request containing the resource identification information for identifying the resources designated by the user and transmits the icon creation request to the information distributing server device 5. For example, the icon creation request is transmitted when a predetermined manipulation such as a tap manipulation or a click manipulation for selecting specific web content among a list of web content displayed in the web page of the portal site is detected. Further, the resource viewing unit 21 receives icon creation information sent back from the information distributing server device 5 in response to this icon creation request. Access destination information indicating an access destination on the communication network NW of the resources designated by the user is contained in this icon creation information. Resource identification information to which a URL indicating an address of the web server device 3 in which the resources are stored is added, for example, is used as the access destination information.

Further, the resource viewing unit 21 can store the resources acquired on the communication network NW in the information storage unit 22. The resource viewing unit 21 may determine whether to store the resources on the communication network in the information storage unit 22 when rendering the resources on the communication network based on whether a predetermined manipulation by the user is detected. For example, when a right-click manipulation from the user using a mouse is detected and a specific menu selection is detected, storage in the information storage unit 22 is executed. Further, the resource viewing unit 21 can also generate icon creation information containing storage destination information in the information storage unit 22 of the resources and deliver the icon creation information to the icon creation unit 24. Thus, it is possible to control the icon creation unit 24 so that an icon for access to local resources that have been locally stored is also created.

The authentication unit 23 authenticates the information distributing server device 5 that is a communication destination of the resource viewing unit 21 using the authentication key held in the information storage unit 22 in advance. In other words, when the icon creation information is received by the resource viewing unit 21, the authentication unit 23 authenticates the information distributing server device 5 based on the icon creation information and performs control to deliver only icon creation information acquired from the information distributing server device 5 that has been successfully authenticated to the icon creation unit 24. Accordingly, the icon creation unit 24 is controlled so that the icon creation process is started up using only the icon creation information acquired from the information distributing server device 5 that has been successfully authenticated. Specifically, an authentication key corresponding to the authentication key held in the information distributing server device 5 is held in the information storage unit 22, and information encrypted using the authentication key is added as information for authentication to the icon creation information acquired from the information distributing server device 5. The authentication unit 23 determines whether the icon creation information has been sent from the authorized information distributing server device 5 using the authentication key and the information for authentication.

When the icon creation information is delivered from the authentication unit 23, the icon creation unit 24 acquires image information of resources corresponding to this icon creation information from the icon management server device 6. Also, the icon creation unit 24 creates an icon to be arranged on the display screen based on the icon creation information and the image information corresponding to the icon creation information. In addition, the icon creation unit 24 embeds access destination information for access to network resources on the communication network NW or local resources in the information storage unit 22 and flag information (classification information) indicating whether resources accessed by the icon to be created are the network resources or the local resources to create the icon. Thus, the icon creation unit 24 adds information from which it is able to be determined whether the resources corresponding to the icon are the network resources or the local resources, to generate the icon.

The display control unit 25 controls the display screen to arrange and display a plurality of created icons on the display screen. The icon use information transmission unit 26 detects a selection input manipulation such as a tap manipulation or a click manipulation of the user with respect to the icons on the display screen display-controlled by the display control unit 25, and acquires the access destination information and the flag information embedded in the detected icon. Also, when the selection input manipulation with respect to the icon is detected, the icon use information transmission unit 26 transmits icon use information containing the access destination information and the flag information, identification information of the selected and input icon, the number of detections of the selection input, time information for detection time, and positional information on the position of the communication terminal device 2 at the time of the detection to the accounting server device 4. Thus, the icon use information transmission unit 26 transmits the icon use information as information from which it is able to be determined whether the resources corresponding to the selected and input icon are the network resources or the local resources. Further, when the flag information embedded in the selected and input icon indicates the local resources, the icon use information transmission unit 26 also outputs the access destination information embedded in the icon to the resource viewing unit 21. Thus, the resource viewing unit 21 can directly acquire the local resources from the information storage unit 22 without using a redirecting process in the accounting server device 4.

The accounting server device 4 includes an icon use information reception unit (use information reception means) 41, an icon use frequency totaling unit (use frequency totaling means) 42, a redirecting unit (redirection means) 43, an information storage unit 44, and an accounting information generation unit (accounting information generation means) 45, as functional components. Hereinafter, a function of each component of the accounting server device 4 will be described.

The icon use information reception unit 41 receives the icon use information about the use of the icon created on the display screen from the plurality of communication terminal devices 2. The access destination information, the flag information, the number of detections, and the time information are contained in this icon use information. In addition, the positional information may be contained in the icon use information. The icon use information reception unit 41 delivers the received icon use information to the icon use frequency totaling unit 42.

The icon use frequency totaling unit 42 totals the icon use frequency in the communication terminal device 2 based on the icon use information received by the icon use information reception unit 41, and stores the icon use frequency in the information storage unit 44. For example, the icon use frequency totaling unit 42 totals the number of selection inputs for each piece of icon identification information contained in the access destination information. In addition, when the positional information of the communication terminal device 2 is contained in the icon use information, the icon use frequency totaling unit 42 can also total the number of selection inputs for each icon for a predetermined area identified by the positional information. Further, the icon use information reception unit 41 is caused to receive communication terminal device identification information and/or user identification information together with the icon use information, and the icon use frequency totaling unit 42 can also total the number of selection inputs for each icon, for each communication terminal device 2 and/or each user of the communication terminal device 2.

When the access destination information has been received by the icon use information reception unit 41, the redirecting unit 43 converts a storage destination address (for example, a URL) of the resources contained in the access destination information of resources notified of from the communication terminal device 2 into a current URL of a storage destination, and transmits the address after the conversion that is identified as redirection information to the resource viewing unit 21 of the communication terminal device 2 (execution of the redirecting process). Specifically, the redirecting unit 43 determines content of the flag information contained in the icon use information received by the icon use information reception unit 41. Also, when the flag information indicates the network resources, the redirecting process is executed with reference to the access destination information contained in the icon use information. In addition, when the flag information contained in the icon use information indicates the local resources, the redirecting unit 43 skips the redirecting process without executing the redirecting process. In addition, the redirecting unit 43 performs the address conversion process with reference to the conversion table stored in the information storage unit 44.

The accounting information generation unit 45 converts total information on the icon use frequency generated by the icon use frequency totaling unit 42 into a fee using a predetermined rate table to create accounting information, and executes various accounting processes for the guidepath reinforcement service based on the conversion result. Accordingly, accounting for the use of the guidepath reinforcement service for each communication terminal device 2 or accounting for the use of the service for each user of the communication terminal device 2 is realized. In addition, the accounting amount at this time can also be set to be different from area to area. Further, a trend of use of the service can also be generated for each communication terminal device 2, for each user, and for each area.

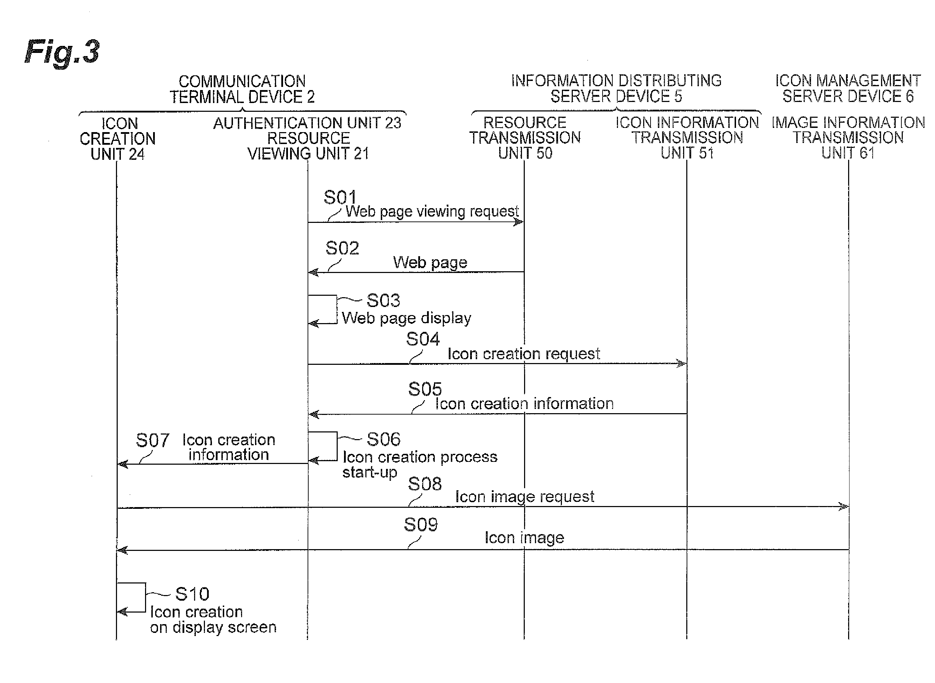

Hereinafter, an automatic icon creation operation of the information distributing system 1 will be described with reference to Fig. 3. Fig. 3 is a sequence diagram illustrating an operation of the automatic icon creation process in the information distributing system 1.

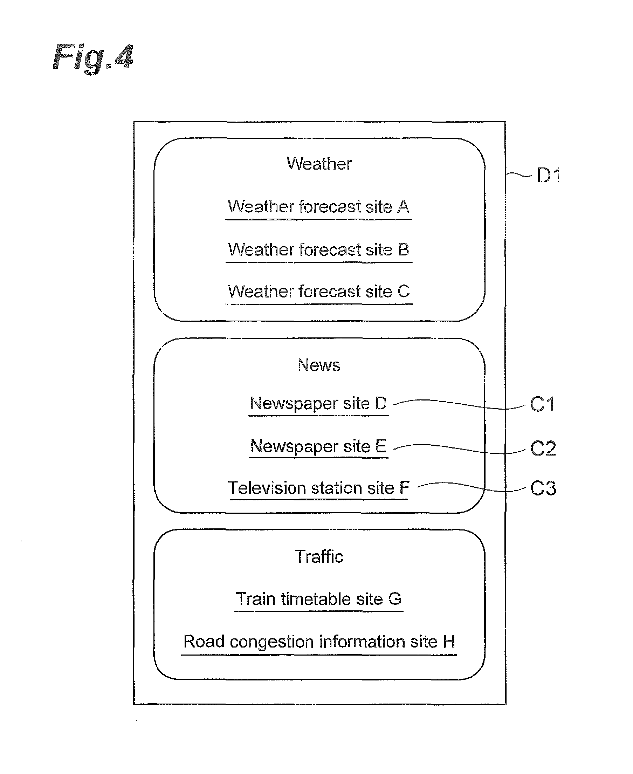

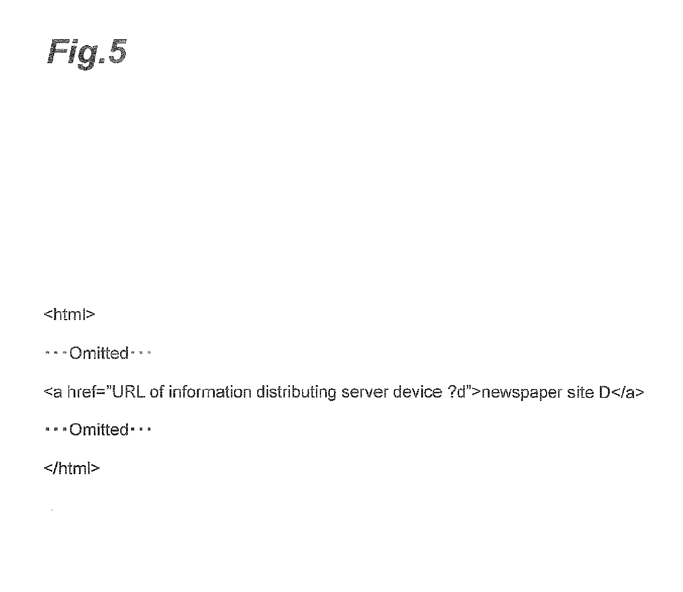

First, a request for acquisition of the web content of the portal site is transmitted to the resource transmission unit 50 of the information distributing server device 5 by the resource viewing unit 21 of the communication terminal device 2 (step S01). In response thereto, HTML content for outputting the web page of the portal site is transmitted from the resource transmission unit 50 to the resource viewing unit 21 (step S02). Then, the received HTML content is rendered and displayed on the display screen by the resource viewing unit 21 (step S03). Accordingly, web content name lists C1, C2 and C3 in respective content categories are displayed on the display screen D1 of the communication terminal device 2, as illustrated in Fig. 4. In addition, a URL indicating the access destination of resources identified by the web content name is embedded as a hyperlink in the HTML content transmitted from the information distributing server device 5, as illustrated in Fig. 5. For example, a URL of "newspaper site D," "URL?d of the information distributing server device," is embedded in the HTML content illustrated in Fig. 5 to correspond to the content C1 "newspaper site D" illustrated in Fig. 4.

Then, when a predetermined manipulation to select a specific content name from the list of web content names displayed in the communication terminal device 2 is detected, an icon creation request containing resource identification information is transmitted from the resource viewing unit 21 to the icon information transmission unit 51 (step S04). For example, an argument "d" for identifying web content having a content name "newspaper site D" contained as a hyperlink in the web page is set in this resource identification information. In response thereto, icon creation information containing access destination information is sent back from the icon information transmission unit 51 to the resource viewing unit 21 (step S05). A URL corresponding to the web content name selected in the communication terminal device 2 is set in this access destination information by being read from the information storage unit 52.

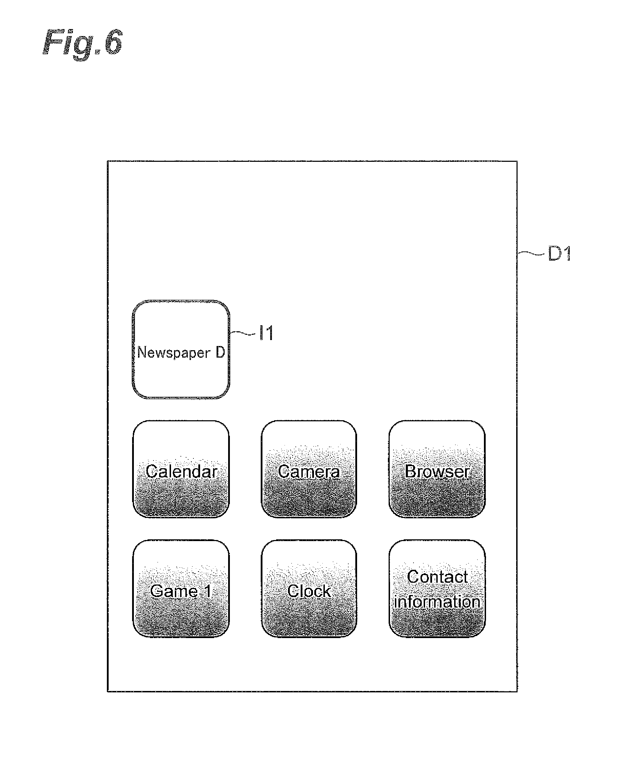

Next, an authentication process of the information distributing server device 5 is performed by the authentication unit 23, and an icon creation process in the icon creation unit 24 is started up by the authentication unit 23 when the icon creation information is acquired from the information distributing server device 5 that has been successfully authenticated (step S06). As a result, the icon creation information is delivered from the authentication unit 23 to the icon creation unit 24 (step S07). An icon image request to request image information about the resources corresponding to the icon that is a creation target is then transmitted to the image information transmission unit 61 of the icon management server device 6 by the icon creation unit 24 (step S08). Identification information (for example, an argument for identifying web content) of the resources corresponding to the icon is contained in this icon image request. In response thereto, the image information is sent back from the image information transmission unit 61 to the icon creation unit 24 (step S09). Finally, an icon is created on the display screen using the icon creation information and the image information corresponding to the icon creation information by the icon creation unit 24 (step S10). An image of the icon 11 generated on the display screen D1 is illustrated in Fig. 6. A name of the resources corresponding to the icon is displayed together in the icon I1 created on the display screen D1, in addition to the image for the resources. Here, the access destination information, and flag information "1" indicating that the resources corresponding to the icon are the network resources is embedded in this icon.

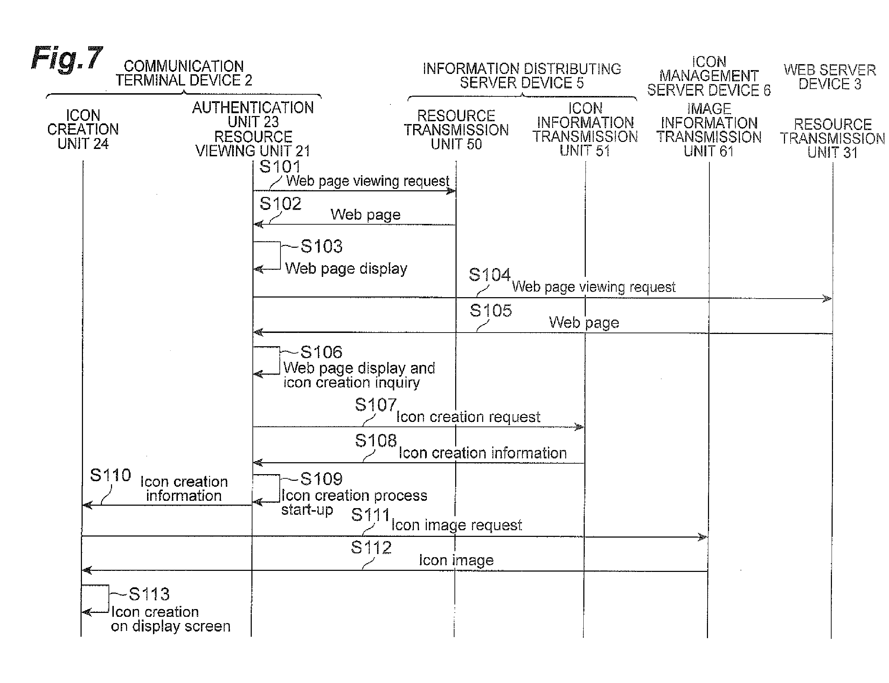

In addition, another automatic icon creation operation of the information distributing system 1 is shown in Fig. 7. In the operation illustrated in Fig. 7, a resource output process is performed in parallel with the automatic icon creation process.

In other words, a web page of a portal site is first displayed on the display screen in the communication terminal device 2, as in steps S01 to S03 illustrated in Fig. 3 (steps S101 to S103). In this state, when a predetermined manipulation for selecting a specific content name in the communication terminal device 2 is detected, an acquisition request for viewing the web page corresponding to the content name is transmitted from the resource viewing unit 21 to the web server device 3 (step S104). In response thereto, HTML content for displaying the web page is transmitted from the resource transmission unit 31 of the web server device 3 to the resource viewing unit 21 (step S105). Then, in the communication terminal device 2, it is determined whether a creation instruction of an icon for access to the web page is received from the user in a state in which the web page is displayed (step S106). This determination is performed by displaying a message for confirming icon creation in the display screen of the communication terminal device 2 and receiving an instruction input from the user in response to the message. In addition, this determination may be performed according to whether a specific manipulation (for example, a push and hold manipulation) has been detected from the user. When it is determined that the creation instruction of an icon has been received, an icon is created on the display screen of the communication terminal device 2 in the same procedure as steps S04 to S10 illustrated in Fig. 3 (steps S107 to S113).

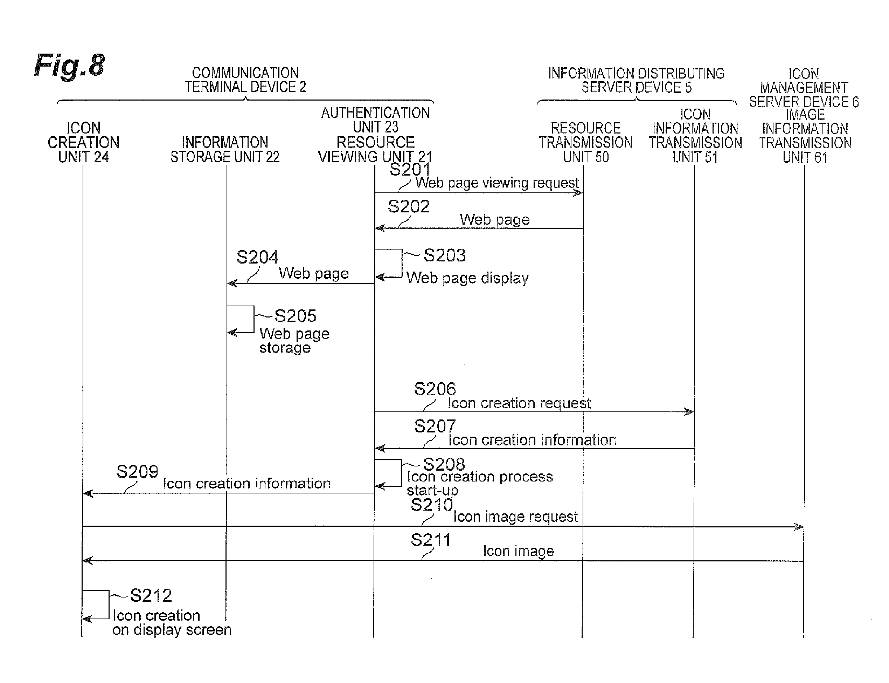

In addition, another operation of the automatic icon creation in the information distributing system 1 is shown in Fig. 8. In the operation illustrated in Fig. 8, a process of automatically creating the icon for local resources that are locally stored is executed in the communication terminal device 2.

In other words, the web page of the portal site is first displayed on the display screen in the communication terminal device 2, as in steps S01 to S03 illustrated in Fig. 3 (steps S201 to S203). In this state, when a predetermined manipulation to instruct to locally store the web page is detected in the communication terminal device 2, an acquired content file of the web page is sent to the information storage unit 22 (step S204). Accordingly, the content file is stored in the information storage unit 22 (step S205). An icon is then created on the display screen of the communication terminal device 2 in the same procedure as steps S04 to S10 illustrated in Fig. 3 (steps S206 to S212). However, the access destination information embedded in the icon created in this case is information indicating a storage destination such as a logic address of the resources in the information storage unit 22. In addition, flag information "0" indicating that the resources corresponding to the icon are local resources is also embedded in the icon. Further, the resources that are locally stored and become icon creation targets are not limited to the web page, and may be multimedia content, such as video data or music data, or a web application, or may be resources acquired from the web server device 3. In addition, in the communication terminal device 2, when resources are stored in the information storage unit 22, various setting information about the resources may be stored in association with the resources, and an operation may be performed so that the various setting information is automatically referred to from the information storage unit 22 when the resources are viewed. Accordingly, various setting tasks at the time of using the resources can be omitted to improve convenience when the user refers to the resources.

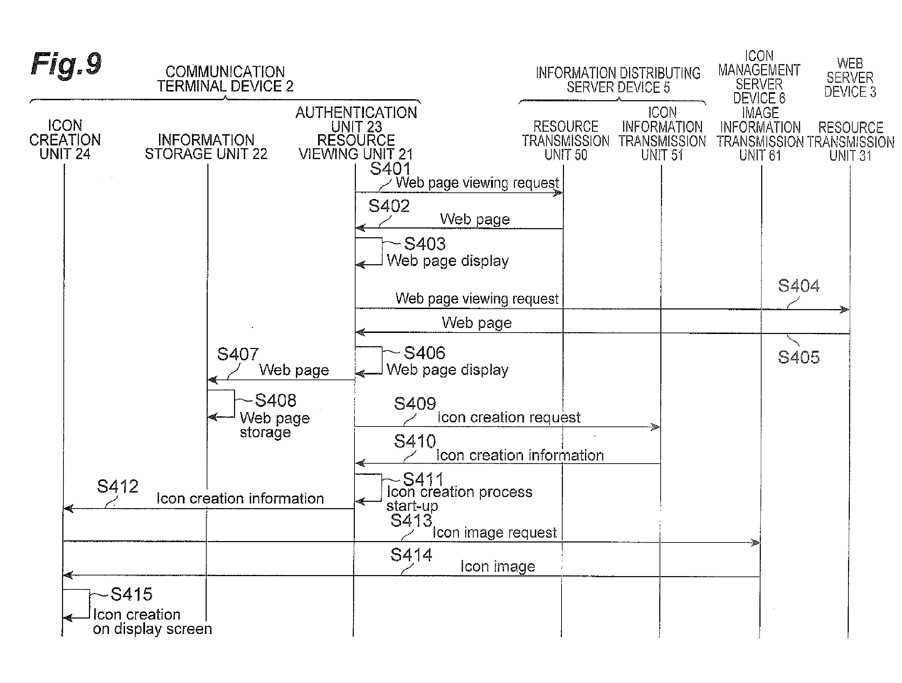

Similarly, the automatic icon creation by the information distributing system 1 may be performed in a procedure such as that illustrated in Fig. 9. In the operation illustrated in Fig. 9, the icon for the resources acquired from the web server device 3 and locally stored is automatically created in the communication terminal device 2. In other words, in the communication terminal device 2, HTML content is received from the web server device 3 and a web page is displayed in the same procedure as steps S101 to S106 of Fig. 7 (steps S401 to S406). Then, when a predetermined manipulation to instruct to locally store the web page is detected in the communication terminal device 2, an acquired content file of the web page is in the information storage unit 22 (steps S407 and S408). An icon is then created on the display screen of the communication terminal device 2 in the same procedure as steps S206 to S212 illustrated in Fig. 8 (steps S409 to S415).

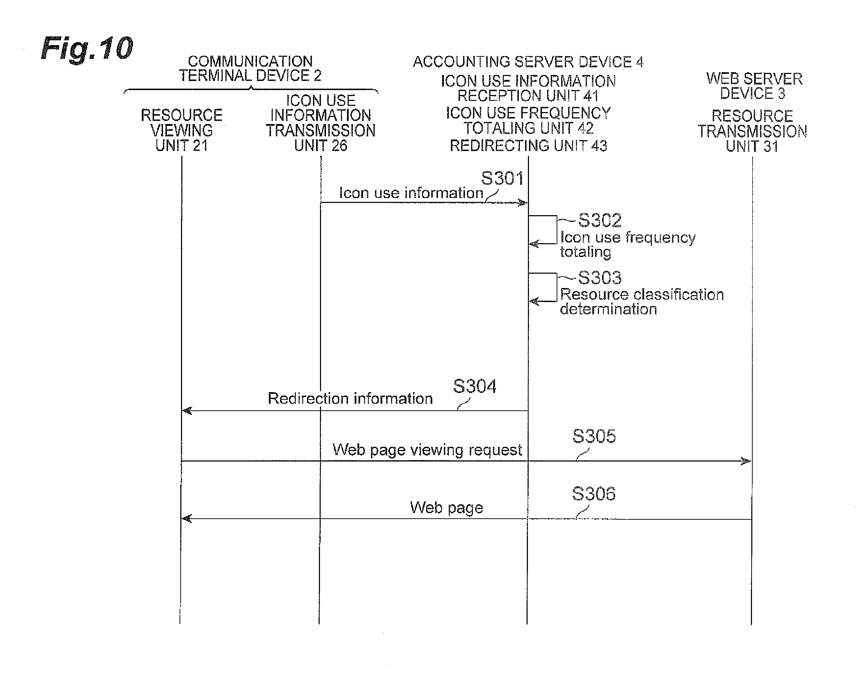

Next, an operation of the icon use frequency totaling process and the redirecting process of the information distributing system 1 will be described with reference to Fig. 10. Fig. 10 is a sequence diagram illustrating an operation of the icon use frequency totaling process and the redirecting process of the information distributing system 1.

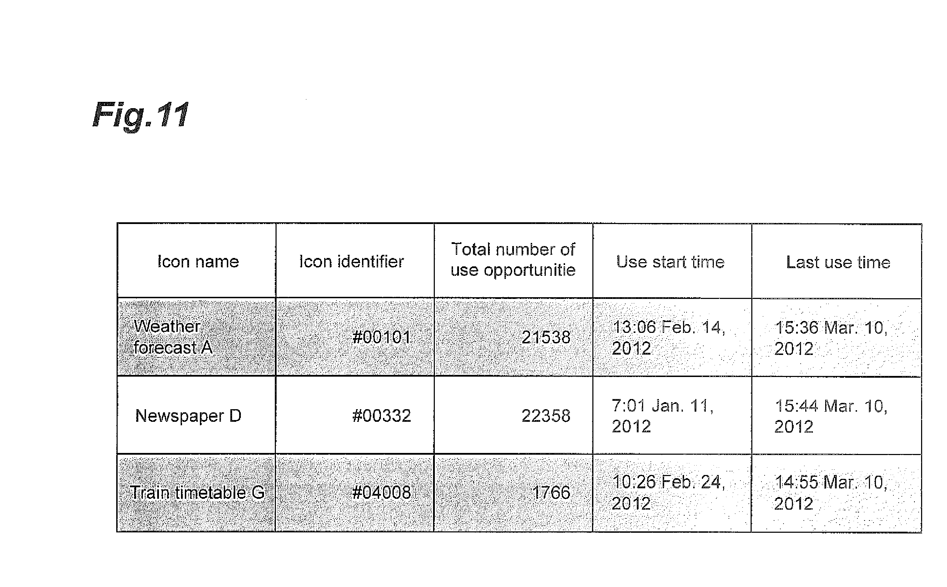

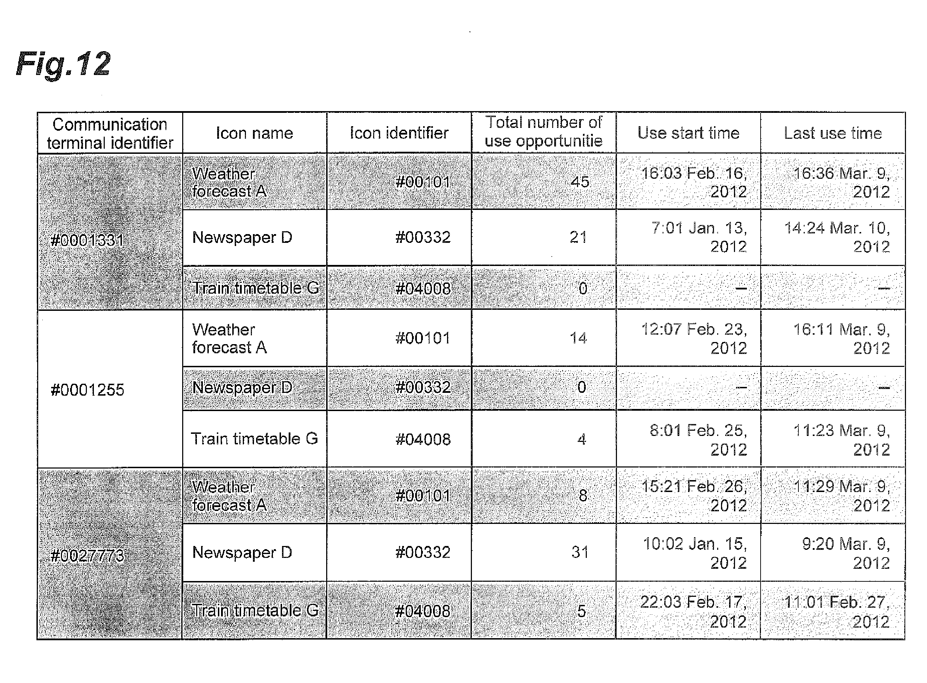

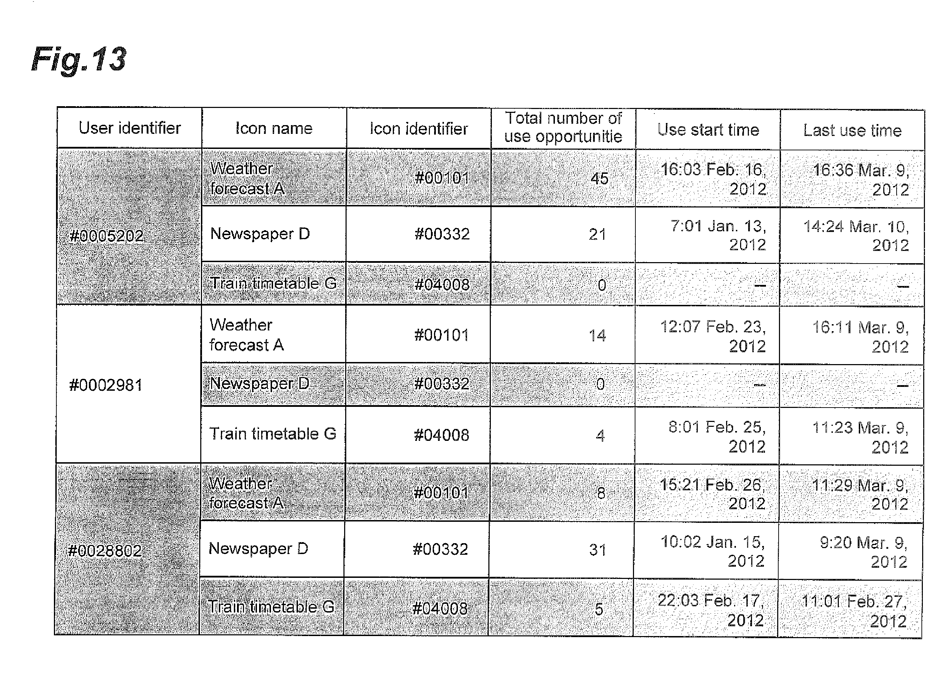

First, when an icon selection input (for example, a tap manipulation or a click manipulation) is detected by the display control unit 25 of the communication terminal device 2, icon use information is transmitted to the icon use information reception unit 41 of the accounting server device 4 by the icon use information transmission unit 26 (step S301). Icon identification information "#00101," the number of detections "1," detection time information "13:06, February 14, 2012," positional information "Otemachi, Chiyoda-ku, Tokyo," access destination information "URL of weather forecast :d," and flag information "1," for example, are added to this icon use information. In response thereto, the icon use frequency is totaled based on the icon use information by the icon use frequency totaling unit 42 of the accounting server device 4 (step S302). This totaling process may be performed each time the icon use information is received or may be performed collectively at a predetermined timing such as a certain period. Fig. 11 illustrates an example of a data structure of the total information totaled by the icon use frequency totaling unit 42. An "icon name" and an "icon identifier" for identifying an icon that is a totaling target, "a total number of use opportunities" indicating a total value of use frequency, and "use start time" and "last use time" indicating a totaling period are contained in the total information, as illustrated in Fig. 11. In addition, this total information may further be totaled for each communication terminal device as illustrated in Fig. 12, or may further be totaled for each user of the communication terminal device 2, as illustrated in Fig. 13.

Further, classification of the resources corresponding to the icon is determined by the redirecting unit 43 of the accounting server device 4 when the icon use information is received by the icon use information reception unit 41 (step S303). In other words, it is determined whether the flag information contained in the received icon use information indicates the network resources or the local resources by the redirecting unit 43. When it is determined that the flag information is "1" and indicates the network resources, a redirecting process of steps S304 to S306 below is performed. On the other hand, when it is determined that the flag information is "0" and indicates the local resources, the process of steps S304 to S306 is skipped and not performed by the redirecting unit 43.

In step S304, a storage destination address (for example, a URL) of the access destination information contained in the icon use information is converted into a current storage destination address (for example, a URL) of resources by the redirecting unit 43, and redirection information containing the storage destination address after the conversion is transmitted to the resource viewing unit 21 of the communication terminal device 2. Then, an acquisition request (for example, HTTP GET request) for resources (for example, a web page) using the storage destination address contained in the redirection information is transmitted to the resource transmission unit 31 of the web server device 3 by the resource viewing unit 21 (step S305). In response thereto, the requested resources are sent back from the resource transmission unit 31 to the resource viewing unit 21 (step S306). As a result, the network resources corresponding to the icon are output by the resource viewing unit 21.

Here, in step S301, when the icon use information cannot be transmitted because no communication is established, a subsequent process is suspended. Meanwhile, when the resources corresponding to the icon selected and input in the communication terminal device 2 are local resources, the local resources corresponding to the icon are acquired from the information storage unit 22 and output by the resource viewing unit 21 at a timing before and after step S301 regardless of a communication establishment state between the communication terminal device 2 and the accounting server device 4.

According to the communication terminal device 2, the accounting server device 4 or the information distributing system 1 described above, in the communication terminal device 2, the icon in which the access destination information and the flag information are embedded and assigned is generated on the display screen, and the icon use information generated with the icon selection input by the user is transmitted to the accounting server device 4 together with the access destination information and the flag information. Further, when the flag information contained in the transmitted icon use information indicates the network resources, the resources are acquired based on the redirection information received from the accounting server device 4, and when the flag information indicates the local resources, the resources are acquired from the information storage unit 22. On the other hand, in the accounting server device 4, when the icon use information is received from the communication terminal device 2, the icon use frequency is totaled based on the icon use information, and when the flag information contained in the icon use information indicates the network resources, the redirection information on the network resources corresponding to the access destination information is sent back to the communication terminal device 2. Accordingly, in the accounting server device 4, the redirecting process of causing the communication terminal device 2 to access the network resources and the process of collecting the icon use information are executed effectively in parallel. As a result, it is possible to efficiently calculate an accurate accounting amount according to the icon use frequency. In addition, the redirecting process can be executed effectively according to the classification of the resources that the communication terminal device 2 wishes to access.

Further, the icon use information reception unit 41 receives the icon use information containing the positional information of the communication terminal device 2 at the time of the selection input of the icon, and the icon use frequency totaling unit 42 totals the use frequency together with the positional information. Accordingly, in the accounting server device 4, the icon use frequency according to a position can be totaled, an accounting process according to a utilization site can be performed, and icon use tendency according to an area can be recognized.

Further, the present invention is not limited to the embodiments described above.

For example, communication between the respective devices in this embodiment can be realized using a communication protocol such as TCP/IP (Transmission Control Protocol/Internet Protocol), or a higher-level protocol HTTP or FTP (File Transfer Protocol), but the communication protocol that is used is not limited to a specific protocol.

In addition, falsification of the icon use information may be prevented by transmitting the icon use information between the icon use information transmission unit 26 of the communication terminal device 2 and the icon use information reception unit 41 of the accounting server device 4 as follows. That is, a hash function may be shared in a state in which access from the outside is not allowed between the icon use information transmission unit 26 and the icon use information reception unit 41, and the icon use information transmission unit 26 may transmit a hash chain that is a result of performing an operation "N" times using the hash function on a character string (for example, icon identification information such as an icon name) determined in advance, in place of the number "N" of detections when transmitting the icon use information. In response thereto, the icon use information reception unit 41 can repetitively perform a hash operation on the original character string using the same corresponding hash function, and identify the number of operation repetitions when the same value as the received hash chain is obtained, as the number of detections. Using such a scheme, it is possible to prevent unauthorized falsification of the information due to spoofing by a functional unit other than the regular icon use information transmission unit 26. Similarly, using other schemes such as encryption, it is possible to achieve improvement of communication security between the communication terminal device 2 and the accounting server device 4.

Further, the icon use information transmission unit 26 of the communication terminal device 2 may perform setting so that the classification of the resources can be identified using other information, without including classification information such as the flag information in the icon use information. For example, the access destination information contained in the icon use information is set to contain a specific character string such as "http://" in the case of the network resources, and to contain a different specific character string such as "file://" in the case of the local resources. Accordingly, in the redirecting unit 43 of the accounting server device 4 that has received the icon use information, the classification of the resources corresponding to the icon is determined based on the access destination information.

In addition, it is preferable for the use information transmission means in the communication terminal device to transmit the use information containing the number of selection inputs and selection input time information. If such a use information transmission means is included, the icon use frequency in each time zone can be totaled and an accounting process in each time zone can be performed in the accounting device.

In addition, it is preferable for the use information transmission means to transmit the positional information on the position at the time of detection of the selection input of the communication terminal device contained as the use information. With such a configuration, the icon use frequency in each position can be totaled, and the accounting process at each utilization site can be performed in the accounting device.

It is preferable for the accounting device according to the above aspect to further include an accounting information generation means that converts the use frequency into accounting information. If such an accounting information generation means is included, accounting information based on the icon use frequency can be generated.

In addition, it is preferable that the use information reception means receive the positional information of the communication terminal device at the time of icon selection and input contained in the use information, and the use frequency totaling means total the use frequency for each piece of positional information. If such a configuration is included, the icon use frequency in each position can be totaled and the accounting process at each utilization site can be performed in the accounting device.

### Industrial Applicability

The present invention is used as a communication terminal device, an accounting device, and an information distributing system that realize an information distribution service over a communication network, and is capable of efficiently calculating an accurate accounting amount according to the icon use frequency.

### Reference Signs List

1 ... Information distributing system, 2 ... Communication terminal device, 4 ... Accounting server device, 21 ... Resource viewing unit (resource viewing means), 22 ... Information storage unit (resource storage means), 24 ... Icon creation unit (icon creation means), 26 ... Icon use information transmission unit (use information transmission means), 41 ... Icon use information reception unit (use information reception means), 42 ... Icon use frequency totaling unit (use frequency totaling means), 42 ... Icon use frequency totaling unit, 43 ... Redirecting unit (redirection means), 45 ... Accounting information generation unit (accounting information generation means), NW ... Communication network.

## Claims

1. A communication terminal device comprising:
an icon creation means configured to create an icon on a display screen for access to resources including network resources on a communication network and locally stored local resources, the icon containing access destination information containing an access destination for the resources so that it is able to be determined whether the resources are the network resources or the local resources;
a resource storage means configured to store the local resources;
a resource viewing means configured to acquire and output resources corresponding to the access destination information included in the icon in response to a selection input of the icon by a user; and
a use information transmission means configured to transmit use information for the selected and input icon to an accounting device together with the access destination information corresponding to the icon as information from which it is able to be determined whether the resources are the network resources or the local resources,
wherein the resource viewing means acquires, from over the communication network, the network resources based on redirection information received in response to the transmission of the use information from the accounting device when the resources corresponding to the access destination information are the network resources, and acquires the local resources from the resource storage means when the resources corresponding to the access destination information are the local resources.

2. The communication terminal device according to claim 1, wherein the use information transmission means transmits the use information containing the number of selection inputs and time information of the selection input.

3. The communication terminal device according to claim 1 or 2, wherein the use information transmission means transmits the use information containing positional information for a position at the time of detection of the selection input of the communication terminal device.

4. An accounting device comprising:
a use information reception means configured to receive use information for selection input of an icon on a display screen from a communication terminal device together with access destination information containing an access destination of resources corresponding to the icon as information from which it is able to be determined whether the resources are network resources on a communication network or locally stored local resources;
a use frequency totaling means configured to total a use frequency of the icon based on the use information; and
a redirection means configured to identify redirection information of the network resources based on the access destination information when the resources are indicated to be network resources, and transmit the redirection information to the communication terminal device.

5. The accounting device according to claim 4, further comprising an accounting information generation means configured to convert the use frequency into accounting information.

6. The accounting device according to claim 4 or 5,
wherein the use information reception means receives the use information containing positional information of the communication terminal device at the time of selection input of the icon, and
the use frequency totaling means totals the use frequency for each piece of positional information.

7. An information distributing system comprising:
the communication terminal device according to any one of claims 1 to 3; and
the accounting device according to any one of claims 4 to 6.
